# FASCICULE DE BREVET EUROPEEN

(11) **EP 2 692 165 B1**
(45) Date de publication et mention de la délivrance du brevet: **23.08.2017**
(21) Numéro de dépôt: 12717388.8
(22) Date de dépôt: 27.03.2012
(51) Int. Cl.: H04W 12/06, H04L 9/32, H04L 29/06, H04W 12/08, G06K 5/00

(54) **MISE EN PLACE D'UNE ASSOCIATION DE SECURITÉ DE TYPE GBA POUR UN TERMINAL DANS UN RÉSEAU DE TÉLÉCOMMUNICATIONS MOBILES**
UMSETZUNG EINER SICHERHEITSASSOZIATION VOM GBA-TYP FÜR EIN ENDGERÄT IN EINEM MOBILFUNKNETZ
PUTTING IN PLACE OF A SECURITY ASSOCIATION OF GBA TYPE FOR A TERMINAL IN A MOBILE TELECOMMUNICATIONS NETWORK

(30) Priorité: 31.03.2011 FR 1152709
(43) Date de publication de la demande: 05.02.2014
(73) Titulaire: Orange, 75015 Paris (FR)
(72) Inventeur: BOURNELLE, Julien, F-75012 Paris (FR); MORAND, Lionel, F-92240 Malakoff (FR)
(86) Numéro de dépôt international: PCT/FR2012/050632
(87) Numéro de publication internationale: WO 2012/168603

(56) Documents cités:
- WO-A1-2009/102248
- WO-A2-2007/062882
- GB-A- 2 450 096
- "Digital cellular telecommunications system (Phase 2+); Universal Mobile Telecommunications System (UMTS); LTE; Generic Authentication Architecture (GAA); Generic Bootstrapping Architecture (GBA) (3GPP TS 33.220 version 9.3.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 3, no. V9.3.0, 1 juillet 2010 (2010-07-01), XP014047407,

## Description

Le domaine de l'invention est celui des télécommunications, et plus particulièrement des télécommunications par réseaux mobiles.

Le 3GPP a défini une architecture appelée GBA (Generic Bootstrapping Architecture) dont le but est de permettre l'authentification d'un terminal mobile pour créer une association de sécurité entre le terminal mobile et une application.

Cette architecture comporte un serveur de fonction d'amorçage, dit BSF (Bootstrapping Function Server) et repose sur un protocole dit AKA de clés d'identification.

Au cours de la procédure d'authentification, le terminal, muni d'une carte SIM, utilise une connexion basée sur le protocole http pour s'authentifier auprès du serveur de fonction d'amorçage BSF. Le principe général est le suivant :
L'authentification a pour résultat une clé de sécurité valable pour une durée déterminée par le serveur. Le serveur fournit également au terminal un identifiant de session associé à la clé de sécurité ainsi que la durée de validité de la clé.

Lorsque le terminal ouvre ultérieurement une connexion IP avec une application, il indique à cette application qu'il souhaite être authentifié selon la technique GBA en lui fournissant l'identifiant de session.

L'application contacte le serveur BSF pour lui fournir l'identifiant de session. Le serveur BSF lui répond en lui fournissant une nouvelle clé dérivée à partir de la clé de sécurité et du nom de l'application. Le terminal effectue les mêmes opérations. Ainsi le terminal et l'application dispose d'une même clé qu'ils peuvent utiliser pour s'authentifier mutuellement et sécuriser la connexion IP entre eux.

Cette procédure implique que le terminal ouvre son navigateur http pour pouvoir ensuite ouvrir une connexion IP avec l'application, cette connexion n'étant pas nécessairement basée sur le protocole http.

Par ailleurs, le terminal mobile s'est préalablement authentifié auprès d'un serveur d'accès réseau, lors de son attachement au réseau. Il y a donc double authentification du terminal mobile, une fois lors de son attachement au réseau puis une seconde fois pour créer une association de sécurité avec une application.

Le document WO 2007/062882 A2 divulgue un procédé de distribution de clés d'application ou de clés à un serveur d'application destiné à des données de sécurisation échangées entre ce serveur d'application et un matériel utilisateur, ce matériel utilisateur accédant à un réseau de communication via un domaine d'accès. La présente invention a pour but de résoudre les inconvénients de la technique antérieure en fournissant un procédé selon la revendication 1. Grâce à l'invention, l'authentification du terminal pour l'association de sécurité de type GBA est couplée avec les opérations effectuées lors de l'attachement du terminal au réseau, au lieu d'être effectuées séparément et consécutivement à celles-ci.

Ainsi, la signalisation émise par le terminal est globalement réduite, et l'utilisation de l'association de sécurité de type GBA se trouve simplifiée.

Notamment, le terminal n'a pas besoin d'ouvrir une connexion http spécifique pour s'authentifier pour l'association de sécurité de type GBA.

L'invention concerne aussi un procédé selon la revendication 2. Grâce à l'invention, si le profil utilisateur associé au terminal supporte l'association de sécurité de type GBA, le serveur d'accès réseau et le serveur d'abonnés dialoguent au moment de l'attachement du terminal au réseau, pour que le serveur d'abonnés indique au serveur d'accès réseau que le profil utilisateur associé au terminal supporte l'association de sécurité de type GBA. Ainsi, le serveur d'accès réseau dispose de cette information qu'il peu mettre à profit pour établir l'association de sécurité.

Selon une caractéristique préférée, la réponse comportant une indication que le profil utilisateur associé au terminal supporte l'association de sécurité de type GBA est de type « Diameter »

Le protocole « Diameter » est l'un des protocoles AAA couramment utilisé.

L'invention concerne aussi un serveur d'accès réseau selon la revendication 4. Dans un mode particulier de réalisation, les différentes étapes du procédé selon l'invention sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tels que mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation préférés décrits en référence aux figures dans lesquelles :
- la figure 1 représente de façon schématique les équipements d'un réseau de télécommunication mobile impliqués dans la présente invention,
- la figure 2 représente les étapes d'un procédé de mise en place d'une association de sécurité de type GBA pour un terminal, selon l'invention.

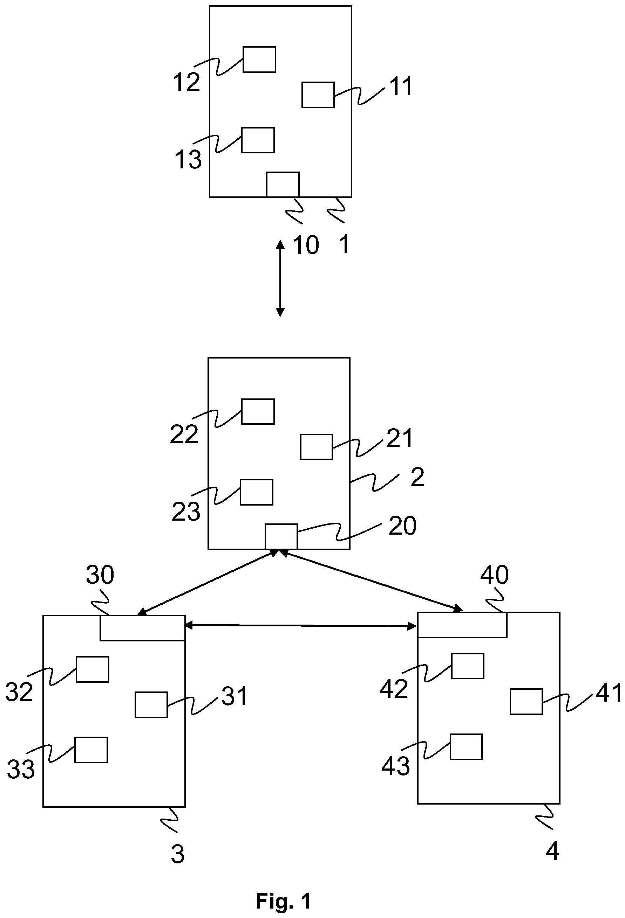

Selon un mode de réalisation de l'invention représenté à la **figure 1****,** les équipements mettant en oeuvre l'invention sont un terminal mobile 1, un serveur 2 d'accès réseau, un serveur 3 de fonction d'amorçage, dit BSF, et un serveur 4 d'abonnés, dit HSS (Home Subscriber Server).

L'invention est mise en oeuvre pour un accès de type GPRS (General Packet Radio Service). Dans ce cas, le serveur d'accès réseau 2 est un Noeud de support GPRS de service, dit SGSN (Serving GPRS Support Node).

Dans un autre mode de réalisation, l'invention est mise en oeuvre dans un réseau de type LTE/EPC (Long Term Evolution/Evolved Packet Core). Dans ce cas, le serveur d'accès réseau 2 est un serveur dit MME (Mobility Management Entity).

Le terminal mobile 1 peut être, par exemple, un terminal de téléphonie mobile, un ordinateur portable, un assistant personnel numérique, ou autre. Dans l'exemple représenté le terminal mobile 1 est un terminal de téléphonie mobile appartenant à un utilisateur.

Comme représenté sur la figure 1, le terminal mobile 1 comporte un module d'émission-réception 10 configuré pour émettre et recevoir des données notamment vers et depuis le serveur d'accès réseau 2. Il comporte également un processeur 11, une mémoire vive 12 et une mémoire morte 13.

Le serveur d'accès réseau 2 a la structure conventionnelle d'un ordinateur. Il comporte un processeur 21, une mémoire vive 22 et une mémoire morte 23. Il comporte un module d'émission-réception 20 configuré pour communiquer avec le terminal mobile 1, le serveur 3 de fonction d'amorçage BSF et le serveur 4 d'abonné HSS.

Le serveur d'accès réseau est adapté pour mettre en place d'une association de sécurité de type GBA pour un terminal. Il comporte des moyens de réception d'une demande d'attachement au réseau depuis le terminal.

Selon l'invention, il comporte en outre :
- des moyens d'envoi d'une requête à un serveur d'abonnés,
- des moyens de réception d'une réponse comportant une indication que le profil utilisateur associé au terminal supporte l'association de sécurité de type GBA.

Le serveur 3 de fonction d'amorçage BSF a la structure conventionnelle d'un ordinateur. Il comporte un processeur 31, une mémoire vive 32 et une mémoire morte 33. Il comporte un module d'émission-réception 30 configuré pour communiquer avec le serveur d'accès réseau 2 et le serveur 4 d'abonné HSS.

Le serveur 4 d'abonné HSS a la structure conventionnelle d'un ordinateur. Il comporte un processeur 41, une mémoire vive 42 et une mémoire morte 43. Il comporte un module d'émission-réception 40 configuré pour communiquer avec le serveur d'accès réseau 2 et le serveur 3 de fonction d'amorçage BSF.

Le serveur d'abonnés 4 héberge les données de profils utilisateur associé à des terminaux. Selon l'invention, si un profil utilisateur associé à un terminal supporte l'association de sécurité de type GBA, alors le serveur d'abonnés mémorise une indication de cette caractéristique.

Le serveur d'abonnés selon l'invention comporte des moyens de réception d'une requête envoyé par un serveur d'accès réseau suite à une demande d'attachement au réseau depuis le terminal, et, si le profil utilisateur associé au terminal supporte l'association de sécurité de type GBA, il comporte des moyens d'envoi d'une réponse comportant une indication de cette caractéristique.

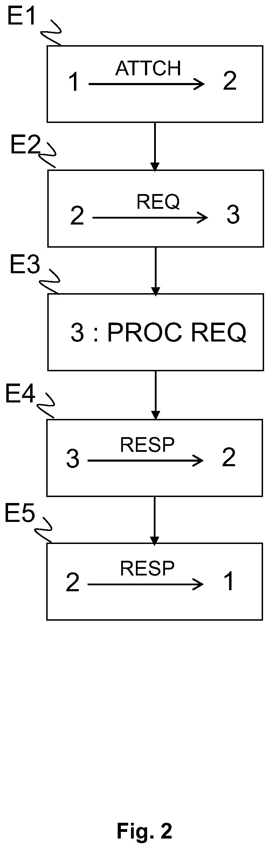

Selon un mode de réalisation de l'invention représenté à la **figure 2****,** le procédé de mise en place d'une association de sécurité de type GBA pour le terminal mobile 1 comporte des étapes E1 à E5.

Les échanges entre le serveur d'accès réseau 2 et le serveur BSF 4 sont par exemple basés sur le protocole Diameter.

A l'étape E1, le terminal mobile 1 demande son attachement au serveur d'accès réseau 2 qui traite cette demande. Les échanges spécifiques à l'attachement au réseau sont classiques et ne seront pas détaillés ici.

Le serveur d'accès réseau 2 traite la demande d'attachement du terminal mobile 1 et effectue une authentification du terminal, procédure durant laquelle il interroge le serveur HSS 4 pour récupérer les paramètres d'authentification AKA.

Le serveur HSS 4 est la base centralisée hébergeant les données du profil utilisateur associé au terminal mobile 1. Si ce profil supporte l'association de sécurité de type GBA, alors le serveur HSS 4 stocke également une indication de cette caractéristique.

Le serveur HSS 4 répond au serveur d'accès réseau 2. On suppose que le terminal mobile 1 supporte l'association de sécurité de type GBA. Le serveur HSS 4 insère donc cette information dans sa réponse au serveur d'accès réseau 2.

Par exemple, si le protocole Diameter est utilisé pour les échanges entre les deux serveurs, l'indication que le terminal mobile 1 supporte l'association de sécurité de type GBA est ajoutée à la commande « Authentification-Information-Answer » envoyée par le serveur HSS 4 au serveur d'accès réseau 2 en réponse à la demande d'authentification. Selon ce protocole, un paquet comporte un ensemble de paires dites AVP (Attribute-Value Pairs). Une paire AVP spécifique « GBA-Support » est ajoutée de la manière suivante :

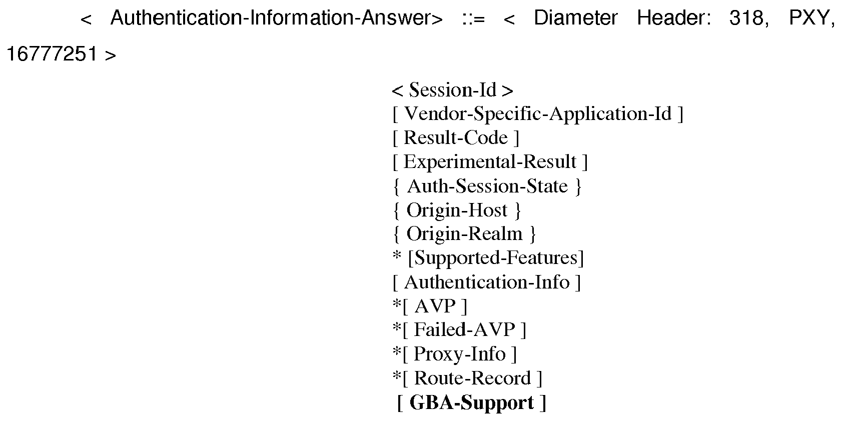

Le serveur d'accès réseau 2 reçoit la réponse du serveur HSS 4. A l'étape suivante E2, le serveur d'accès réseau 2 interroge le serveur BSF 3 pour demander la création d'une association de sécurité GBA. Pour cela, le serveur d'accès réseau 2 génère une requête Diameter dans laquelle il fournit l'identifiant unique, ou identité d'abonné mobile internationale IMSI (International Mobile Subscriber Identity) de l'utilisateur du terminal mobile 1. Cette requête est envoyée au serveur BSF 3.

Une réalisation possible de la requête Diameter initiée par le serveur d'accès réseau 2 est la suivante :

```
   < GBA-Info-Request> ::=<Diameter Header: xxx, REQ, PXY, yyyyy >
                   < Session-Id >
                   {Vendor-Specific-Application-Id}
                   {Origin-Host} ; Address of Access server
                   {Origin-Realm} ; Realm of Access server
                   {Destination-Realm} ; Realm of BSF
                   [Destination-Host] ; Address of the BSF
                   {User-Name} ; IMSI
                   [GBA_U-Awareness-Indicator] ; GBA_U awareness
                   *[AVP]
                   *[Proxy-Info]
                   *[Route-Record]
```

A l'étape suivante E3, le serveur BSF 3 reçoit et traite la requête du serveur d'accès réseau 2. Il vérifie que l'identifiant unique IMSI de l'utilisateur du terminal mobile 1 existe et a droit au service GBA. Si c'est le cas, le serveur BSF 3 interroge le serveur d'abonnés HSS 4 pour récupérer les paramètres d'authentification AKA. Le serveur d'abonnés HSS 4 envoie les paramètres d'authentification AKA au serveur BSF 3. Les paramètres d'authentification sont sous la forme d'un vecteur d'authentification, comportant une valeur aléatoire RAND générée par le serveur HSS 4, un jeton d'authentification du réseau AUTN permettant d'authentifier le réseau, une clé de chiffrement CK et une clé d'intégrité Ik.

Après avoir reçu les paramètres d'authentification AKA, le serveur BSF 3 forme une clé Ks en concaténant les clés Ik et Ck, génère un identifiant de session B-TID et détermine la durée de validité de la session GBA associé à la clé Ks.

A l'étape suivante E4, le serveur BSF 3 génère et envoie la réponse au serveur d'accès réseau 2 et lui fournit les informations suivantes : la valeur aléatoire RAND générée par le HSS, le jeton AUTN permettant d'authentifier le réseau, calculé par le HSS, l'identifiant de session B-TID et la durée de validité de la clé Ks.

Une réalisation possible de la réponse Diameter fournie par le serveur BSF 3 au serveur d'accès réseau 2 est la suivante :

```
   < GBA-Info-Answer> ::= < Diameter Header: xxx, PXY, yyyyy >
                   < Session-Id >
                   {Vendor-Specific-Application-Id}
                   [Result-Code]
                   [Experimental-Result]
                   {Origin-Host} ; Address of BSF
                   {Origin-Realm} ; Realm of BSF
                   [User-Name] ; IMPI
                   {Transaction-Identifier} ; B-TIR
                   [RAND] ; RAND
                   [AUTN] ; AUTAN
                   [Key-ExpiryTime] ; Time of expiry
                   *[AVP]
                   *[Proxy-Info]
                   *[Route-Record]
```

A l'étape suivante E5, le serveur d'accès réseau 2 reçoit et traite la réponse du serveur BSF 3, récupère les informations GBA et les transmet au terminal mobile 1.

Pour cela, dans les modes de réalisation GPRS et LTE/EPC, le serveur d'accès réseau 2 envoie au terminal mobile 1 un message ATTACH ACCEPT qui est modifié pour comporter quatre éléments d'information optionnels qui seront interprétés par le terminal mobile 1 s'il supporte l'authentification GBA. Sinon, ces éléments d'information seront ignorés par le terminal mobile 1.

Les éléments d'information supplémentaires sont :
- la valeur aléatoire RAND,
- le jeton d'authentification AUTN,
- l'identifiant de session B-TID et
- la durée de validité de la clé Ks.

Ainsi le terminal mobile 1 dispose des données d'authentification GBA, qu'il pourra utiliser ultérieurement, de manière classique, lorsqu'il se connectera à une application.

## Revendications

1. Procédé de mise en place d'une association de sécurité de type GBA pour un terminal (1) dans un réseau de télécommunications mobiles,
ledit procédé comportant les étapes suivantes, exécutées dans un serveur d'accès réseau (2) au réseau de télécommunications mobiles:
- réception (E1) d'une demande d'attachement audit réseau depuis le terminal, et suite à ladite réception:
- envoi d'une requête à un serveur d'abonnés (4),
- réception d'une réponse dudit serveur d'abonnés
comportant une indication que le profil
utilisateur associé au terminal supporte l'association de sécurité de type GBA.
- envoi (E2) à un serveur de fonction d'amorçage (3) d'une requête pour demander la création d'une association de sécurité de type GBA,
- réception (E4) d'une réponse du serveur de fonction d'amorçage, ladite réponse comprenant des données d'authentification GBA pour l'association de sécurité,
- envoi (E5)
au terminal d'un message d'acceptation d'attachement
comprenant lesdites
données d'authentification GBA pour l'association de
sécurité, destinées à être utilisées par le terminal lors d'une connexion ultérieure du terminal à une application.

2. Procédé de mise en place d'une association de sécurité de type GBA pour un terminal (1) dans un réseau de télécommunications mobiles,
ledit procédé comportant les étapes suivantes, exécutées dans un serveur d'abonnés (4) :
- réception d'une requête depuis un serveur d'accès réseau (2) au réseau
de télécommunications mobiles, suite à la réception par ledit serveur d'accès réseau d'une demande d'attachement audit réseau depuis le terminal,
- envoi audit serveur d'accès réseau
d'une réponse comportant une indication que le profil utilisateur associé au terminal supporte l'association de sécurité de type GBA,
- réception d'une requête d'un serveur d'amorçage (3) pour récupérer des paramètres d'authentification AKA,
- envoi audit serveur d'amorçage d'une réponse comportant lesdits paramètres d'authentification AKA.

3. Procédé selon la revendication 1 ou 2, **caractérisé en ce que** la réponse comportant une indication que le profil utilisateur associé au terminal supporte l'association de sécurité de type GBA est de type « Diameter »

4. Serveur d'accès réseau (2)
à un réseau de télécommunications mobiles
adapté pour mettre en place une association de sécurité de type GBA pour un terminal (1) dans ledit réseau de télécommunications mobiles, comportant:
des
moyens de réception (E1)
d'une demande d'attachement audit réseau depuis le
terminal
- des moyens d'envoi d'une requête à un serveur d'abonnés (4),
- des moyens de réception d'une réponse dudit serveur d'abonnés comportant une indication
que le profil utilisateur associé au terminal supporte l'association de sécurité de type GBA.
- des moyens d'envoi (E2) à un serveur de fonction d'amorçage (3) d'une requête pour demander la création d'une association de sécurité de type GBA,
- des moyens de réception (E4) d'une réponse du serveur de fonction d'amorçage, ladite réponse comprenant des données d'authentification GBA pour l'association de sécurité,
- des moyens d'envoi (E5)
au terminal d'un message d'acceptation
d'attachement comprenant lesdites
données d'authentification GBA pour
l'association de sécurité, destinées à être utilisées par le terminal lors
d'une connexion ultérieure du terminal à une application.

5. Programme d'ordinateur comportant des instructions pour l'exécution des étapes du procédé selon la revendication 1 lorsque ledit programme est exécuté par un ordinateur.

6. Support d'enregistrement lisible par un ordinateur sur lequel est enregistré un programme d'ordinateur comprenant des instructions pour l'exécution des étapes du procédé selon la revendication 1.

7. Programme d'ordinateur comportant des instructions pour l'exécution des étapes du procédé selon la revendication 2 lorsque ledit programme est exécuté par un ordinateur.

8. Support d'enregistrement lisible par un ordinateur sur lequel est enregistré un programme d'ordinateur comprenant des instructions pour l'exécution des étapes du procédé selon la revendication 2.

## Patentansprüche

1. Verfahren zum Einrichten einer Sicherheitsassoziation vom GBA-Typ für ein Endgerät (1) in einem Mobilfunknetz, wobei das Verfahren die folgenden Schritte umfasst, die in einem Zugangsnetzserver (2) für das Mobilfunknetz ausgeführt werden:
- Empfangen (E1) einer Anbindungsanfrage an das Netz von dem Endgerät, und nach dem Empfang:
- Senden einer Anforderung an einen Teilnehmerserver (4),
- Empfangen einer Antwort von dem Teilnehmerserver, umfassend eine Anzeige, dass das mit dem Endgerät assoziierte Benutzerprofil die Sicherheitsassoziation vom GBA-Typ unterstützt,
- Senden (E2) einer Anforderung an einen Betriebsarbeitsserver (3), um die Herstellung einer Sicherheitsassoziation vom GBA-Typ anzufragen,
- Empfangen (E4) einer Antwort des Betriebsarbeitsservers, wobei die Antwort GBA-Authentifizierungsdaten für die Sicherheitsassoziation umfasst,
- Senden (E5) einer Annahmenachricht der Anbindung an das Endgerät, umfassend die GBA-Authentifizierungsdaten für die Sicherheitsassoziation, die dazu bestimmt sind, von dem Endgerät bei einer späteren Verbindung des Endgeräts mit einer Anwendung verwendet zu werden.

2. Verfahren zum Einrichten einer Sicherheitsassoziation vom GBA-Typ für ein Endgerät (1) in einem Mobilfunknetz, wobei das Verfahren die folgenden Schritte umfasst, die in einem Teilnehmerserver (4) ausgeführt werden:
- Empfangen einer Anforderung von einem Zugangsnetzserver (2) für das Mobilfunknetz, nach dem Empfang einer Anbindungsanfrage an das Netz von dem Endgerät durch den Zugangsnetzserver,
- Senden einer Antwort an den Zugangsnetzserver, umfassend eine Anzeige, dass das mit dem Endgerät assoziierte Benutzerprofil die Sicherheitsassoziation vom GBA-Typ unterstützt,
- Empfangen einer Anforderung eines Arbeitsservers (3), um AKA-Authentifizierungsparameter zu erhalten,
- Senden einer Antwort an den Arbeitsserver, umfassend die AKA-Authentifizierungsparameter.

3. Verfahren nach Anspruch 1 oder 2,
**dadurch gekennzeichnet, dass** die Antwort, die eine Anzeige umfasst, dass das mit dem Endgerät assoziierte Benutzerprofil die Sicherheitsassoziation vom GBA-Typ unterstützt, vom Typ "Diameter" ist.

4. Zugangsnetzserver (2) für ein Mobilfunknetz, welcher eingerichtet ist, eine Sicherheitsassoziation vom GBA-Typ für ein Endgerät (1) in dem Mobilfunknetz einzurichten, umfassend:
- Empfangsmittel (E1) einer Anbindungsanfrage an das Netz von dem Endgerät,
- Sendemittel einer Anforderung an einen Teilnehmerserver (4),
- Empfangsmittel einer Antwort des Teilnehmerservers, umfassend eine Anzeige, dass das mit dem Endgerät assoziierte Benutzerprofil die Sicherheitsassoziation vom GBA-Typ unterstützt,
- Sendemittel (E2) einer Anforderung an einen Betriebsarbeitsserver (3), um die Herstellung einer Sicherheitsassoziation vom GBA-Typ anzufragen,
- Empfangsmittel (E4) einer Antwort des Betriebsarbeitsservers, wobei die Antwort GBA-Authentifizierungsdaten für die Sicherheitsassoziation umfasst,
- Sendemittel (E5) einer Annahmenachricht der Anbindung an das Endgerät, umfassend die GBA-Authentifizierungsdaten für die Sicherheitsassoziation, die dazu bestimmt sind, von dem Endgerät bei einer späteren Verbindung des Endgeräts mit einer Anwendung verwendet zu werden.

5. Computerprogramm, umfassend Instruktionen zur Ausführung von Schritten des Verfahrens nach Anspruch 1, wenn das Programm von einem Computer ausgeführt wird.

6. Computerlesbares Aufzeichnungsmedium, auf welchem ein Computerprogramm aufgezeichnet ist, umfassend Instruktionen zur Ausführung von Schritten des Verfahrens nach Anspruch 1.

7. Computerprogramm, umfassend Instruktionen zur Ausführung von Schritten des Verfahrens nach Anspruch 2, wenn das Programm von einem Computer ausgeführt wird.

8. Computerlesbares Aufzeichnungsmedium, auf welchem ein Computerprogramm aufgezeichnet ist, umfassend Instruktionen zur Ausführung von Schritten des Verfahrens nach Anspruch 2.

## Claims

1. Method of putting in place a security association of GBA type for a terminal (1) in a mobile telecommunications network,
said method comprising the following steps, executed in a network access server (2) for access to the mobile telecommunications network:
- reception (E1) of a request for attachment to said network from the terminal, and subsequent to said reception:
- dispatch of a request to a subscriber server (4),
- reception of a response from said subscriber server comprising an indication that the user profile associated with the terminal supports the security association of GBA type,
- dispatch (E2) to a bootstrap function server (3) of a request asking for the creation of a security association of GBA type,
- receipt (E4) of a response from the bootstrap function server, said response comprising GBA authentication data for the security association,
- dispatch (E5) to the terminal of an attachment acceptance message comprising said GBA authentication data for the security association, which are intended to be used by the terminal during a subsequent connection of the terminal to an application.

2. Method of putting in place a security association of GBA type for a terminal (1) in a mobile telecommunications network,
said method comprising the following steps, executed in a subscriber server (4):
- reception of a request from a network access server (2) for access to the mobile telecommunications network, subsequent to the reception by the network access server of a request for attachment to the network from the terminal,
- dispatch to said network access server of a response comprising an indication that the user profile associated with the terminal supports the security association of GBA type,
- receipt of a request from a bootstrap server (3) to recover AKA authentication parameters,
- dispatch to said bootstrap server of a response comprising said AKA authentication parameters.

3. Method according to Claim 1 or 2, **characterized in that** the response comprising an indication that the user profile associated with the terminal supports the security association of GBA type is of "Diameter" type.

4. Network access server (2) for access to a mobile telecommunications network adapted for putting in place a security association of GBA type for a terminal (1) in said mobile telecommunications network, comprising:
- means for receiving (E1) a request for attachment to the network from the terminal,
- means for dispatching a request to a subscriber server (4),
- means for receiving a response from said subscriber network comprising an indication that the user profile associated with the terminal supports the security association of GBA type,
- means of dispatch (E2) to a bootstrap function server (3) of a request asking for the creation of a security association of GBA type,
- means of receipt (E4) of a response from the bootstrap function server, said response comprising GBA authentication data for the security association,
- means of dispatch (E5) to the terminal of an attachment acceptance message comprising said GBA authentication data for the security association, which are intended to be used by the terminal during a subsequent connection of the terminal to an application.

5. Computer program comprising instructions for the execution of the steps of the method according to Claim 1 when said program is executed by a computer.

6. Recording medium readable by a computer on which is recorded a computer program comprising instructions for the execution of the steps of the method according to Claim 1.

7. Computer program comprising instructions for the execution of the steps of the method according to Claim 2 when said program is executed by a computer.

8. Recording medium readable by a computer on which is recorded a computer program comprising instructions for the execution of the steps of the method according to Claim 2.
